# EUROPÄISCHE PATENTANMELDUNG

(11) **EP 1 150 025 A1**
(43) Veröffentlichungstag der Anmeldung: **31.10.2001**
(21) Anmeldenummer: 00109274.1
(22) Anmeldetag: 28.04.2000
(51) Int. Cl.: F16B 39/24

(54) **Klemmscheibe aus Metall oder Kunststoff**

(71) Anmelder: Armacell Enterprise GmbH, 48153 Münster (DE)
(72) Erfinder: Karl, Reinhard, 88171 Weiler (DE)
(74) Vertreter: Finck, Dieter, Dr.Ing.

(57) **Zusammenfassung**

Die Klemmscheibe aus Metall oder Kunststoff hat eine im wesentlichen zentrale Öffnung (12) für den Klemmeingriff mit einem stiftförmigen Körper, der durch die Öffnung (12) von der einen Seite (10) der Klemmscheibe aus einschiebbar ist, sowie sich von der Öffnung (12) aus erstreckende Schlitze (13), die zueinanderim wesentlichen gleiche Winkelabstände haben und in einem Abstand vom äußeren Rand (14) der Klemmscheibe enden. Dabei sind alle zwischen den Schlitzen (13) gebildeten sektorförmigen Abschnitte (15) in gleicher Richtung aus der Ebene der einen Seite (10) der Klemmscheibe zur Öffnung (12) hin ausgebogen. Zur Erhöhung der Steifigkeit der sektorförmigen Abschnitte bei ausreichender elastischer Federungsmöglichkeit in ihrem Fußbereich hat jeder sektorförmiger Abschnitt (15) wenigstens eine von der zentralen Öffnung (12) ausgehende, sich zwischen seinen zugeordneten Schlitzen (13) erstreckende Sicke (16).

## Beschreibung

Die Erfindung betrifft eine Klemmscheibe aus Metall oder Kunststoff mit einer im wesentlichen zentralen Öffnung für den Klemmeingriff mit einem stiftförmigen Körper, der durch die Öffnung von der einen Seite der Klemmscheibe aus einschiebbar ist, und mit sich von der Öffnung aus erstreckenden Schlitzen, die zu einander im wesentlichen gleiche Winkelabstände haben und in einem Abstand vom äußeren Rand der Klemmscheibe enden, wobei alle zwischen den Schlitzen gebildeten sektorförmigen Abschnitte in gleicher Richtung aus der Ebene der einen Seite der Klemmscheibe zur Öffnung hin ausgebogen sind.

Solche Klemmscheiben, wie sie beispielsweise von der Firma Seeger hergestellt werden, werden für die verschiedensten Befestigungszwecke eingesetzt, beispielsweise für die Radbefestigung bei Spielzeugen durch Aufschieben von Klemmscheiben auf deren Welle, zum hochwertigen Befestigen im Fahrzeugbau unter Verwendung von Klemmstiften oder auch zum Halten von Isolierungen an Wand- und Deckenflächen, an denen davon abstehende Haltestifte fixiert sind, auf die die Isolierung aufgeschoben und dann durch Aufschieben der Klemmscheiben auf die Haltestifte gehalten werden. Die Haltefunktion ergibt sich aufgrund der kegelförmig an dem zylindrischen Stift bzw. an der zylindrischen Welle angreifenden öffnungsseitigen Enden der Zungen bildenden sektorförmigen Abschnitte.

Die bekannten Klemmscheiben bestehen in der Regel aus Federstahl, also aus einem sehr teueren Werkstoff, der nach dem Stanzen gehärtet werden muß, um die erforderliche Elastizität und Festigkeit zu erhalten, damit ein Abknicken der Zungen vermieden wird. Die Klemmscheiben sind aus diesem Grund sehr steif und lassen sich deshalb schwer auf die Stifte oder Wellen aufschieben, wobei die Paßgenauigkeit zwischen Stift bzw. Welle und der zentralen Öffnung in der Scheibe sehr hoch sein muß.

Die der Erfindung zugrundeliegende Aufgabe besteht nun darin, Klemmscheiben der eingangs genannten Art so auszugestalten, daß auch bei Verwendung von nicht hochwertigen Materialien im normalen Toleranzbereich eine hohe Klemmwirkung erreicht wird.

Diese Aufgabe wird ausgehend von der Klemmscheibe der eingangs genannten Art dadurch gelöst, daß jeder sektorförmige Abschnitt wenigstens eine von der zentralen Öffnung ausgehende, sich zwischen seinen zugeordneten Schlitzen erstreckende Sicke hat.

Aufgrund der Wirkung der Sicke als Verstärkungskante oder Verstärkungsrippe können die wandungsseitigen Spitzen der Zungen bildenden sektorförmigen Abschnitte nicht ausknicken, während die Federwirkung im Fußbereich der sektorförmigen Abschnitte stattfindet, der jedoch aufgrund seiner kurzen Knicklänge im Verhältnis zum Querschnitt stabil ist. Das federnde Abknicken wird somit aus dem Spitzenbereich der sektorförmigen Abschnitte, wo es beim Stand der Technik stattfindet, in den Fußbereich verlegt. Versuche haben eine Verbesserung der Haltekraft von über 30% verglichen mit dem Stand der Technik ergeben, ohne daß sich die Aufdrückkraft ähnlich erhöhen würde. Dabei hat es sich gezeigt, daß sich als Werkstoff auch weiche Aluminiumbleche eignen und damit die gleiche Haltekraft wie mit Federstahlblech erreicht werden kann. Außerdem kann die Härtebehandlung anschließend an den Stanz- und Preßprozess entfallen.

Damit eine symmetrische Aussteifung der sektorförmigen Abschnitte erreicht wird, hat zweckmäßigerweise jede Sicke einen im wesentlichen gleichen Winkelabstand zu den ihren sektorförmigen Abschnitt begrenzenden Schlitzen.

Die Einwölbung der Sicke kann sowohl auf der einen als auch auf der anderen Seite der Klemmscheibe oder wechselseitig vorgenommen werden. Bevorzugt befindet sich die Einwölbung der Sicke eines jeden sektorförmigen Abschnitts jedoch auf der einen Seite der Klemmscheibe, die von dem Haltestift bzw. der Welle beim Aufschieben abgewandt ist. Dadurch bildet die Sicke öffnungsseitig eine Aufwölbung.

Eine ausreichende Federung im Fußbereich der sektorförmigen Abschnitte ist dann gewährleistet, wenn sich die Sicke von der Öffnung bis zu einer Linie erstreckt, die die klemmscheibenrandseitigen Enden zweier benachbarter Schlitze verbindet, oder wenn die Sicke vor dieser Linie endet.

Die Sicke kann im Querschnitt eine spitze oder eine runde Einwölbung haben, was von der gewählten Fertigungstechnik abhängt.

Die Steifigkeit der Klemmscheibe kann dadurch weiter erhöht werden, daß zwischen den klemmscheibenrandseitigen Enden der Schlitze und dem Umfangsrand der Klemmscheibe eine umlaufende Umfangssicke ausgebildet ist. Die gleiche Maßnahme ermöglicht auch eine Reduzierung der Materialdicke der Klemmscheibe.

Dabei befindet sich die Einwölbung der Umfangssicke vorteilhafterweise auf der einen Seite der Klemmscheibe, also auf der gleichen Seite, von der die Einwölbung der im wesentlichen radial verlaufenden Sicken ausgeht.

Sollte sich für das gewählte Material und die gewählte Materialstärke die Aufdrückkraft als zu hoch erweisen, kann, um die Aufdrückkraft zu senken, eine Entlastung dadurch erreicht werden, daß am Fuß der sektorförmigen Abschnitte oder am sektorförmigen Abschnitt selbst Querschnittsveränderungen vorgenommen werden, beispielsweise in Form von Bohrungen, die sich durch die Klemmscheibe an den randseitigen Enden der Schlitze erstrecken.

Die erfindungsgemäßen Klemmscheiben können randseitig zur weiteren Erhöhung ihrer Steifigkeit eine Aufkantung aufweisen.

Aufgrund der erfindungsgemäßen Ausgestaltung der Klemmscheiben können die Toleranzen zwischen der zentralen Öffnung und dem stiftförmigen Körper nach oben relativ groß sein. Wenn der für den Klemmeingriff mit der zentralen Öffnung vorgegebene Durchmesser 2,1 mm betragen soll, können auch stiftförmige Körper mit einem Durchmesser bis 2,6 mm verwendet werden. Gegenüber den eingangs beschriebenen bekannten Klemmscheiben bedeutet dies eine Toleranzsteigerung um mehr als das Zehnfache.

Anhand von Zeichnungen wird ein Ausführungsbeispiel der Erfindung näher erläutert. Es zeigt:
- Fig. 1: eine Draufsicht auf eine Klemmscheibe,
- Fig. 2: den Schnitt II-II von Fig. 1 und
- Fig. 3: in einer Einzelheit das öffnungsseitige Ende eines sektorförmigen Abschnitts.

Die in der Zeichnung gezeigte Klemmscheibe hat eine Kreisform und zwischen ihrer einen Seite 10 und ihrer anderen Seite 11 eine vorgegebene Materialstärke.

Die Klemmscheibe hat mittig eine zentrale kreisförmige Öffnung 12, an ihrem Außenumfang eine Aufkantung 14 und dazwischen eine koaxiale Umfangssicke 19, die von der einen Seite 10 her eingewölbt ist.

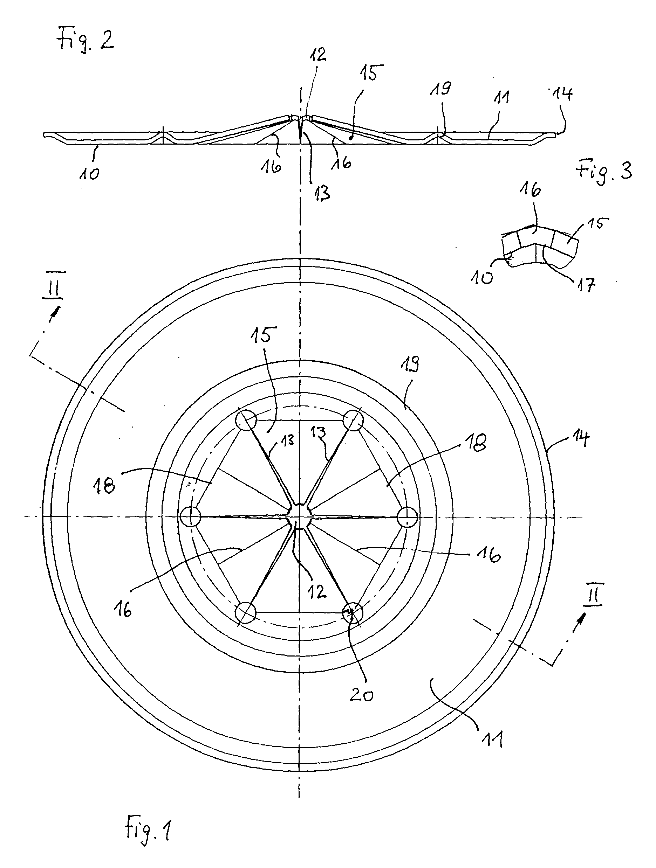

Von der zentralen Öffnung 12 erstrecken sich in einem gleichen Winkelabstand von 60° sechs radiale Schlitze 13 von der einen Seite 10 bis zur anderen Seite 11 der Klemmscheibe. Die der zentralen Öffnung 12 gegenüberliegenden Enden 20 der Schlitze 13 liegen auf einer Linie 18 innerhalb der Umfangssicke 19. Die ein regelmäßiges Sechseck begrenzenden Linien 18 bilden die Fußbereiche von sechs zwischen den radialen Schlitzen 13 ausgebildeten sektorförmigen Abschnitten 15, die, wie in Fig. 3 gezeigt ist, von der Ebene der einen Seite 10 nach außen abgebogen sind, so daß sich die zentrale Öffnung 12 etwas oberhalb der von der Abkantung 14 gebildeten Umfangsebene befindet. Die zentrale Öffnung 12 wird also von den radial innenliegenden Enden der sektorförmigen Abschnitte 15 und den Mündungen der Schlitze 13 begrenzt.

Jeder sektorförmige Abschnitt 15 hat eine in Fig. 1 und 2 als Linie veranschaulichte Sicke 16, die zu jedem seiner angrenzenden Schlitze 13 einen gleichen Winkelabstand, im vorliegenden Fall 30°, hat, wobei das radial äußere Ende der Sicke 16 auf der Verbindungslinie 18 liegt, zu der sich die Sicke 16 im wesentlichen senkrecht erstreckt.

Wie aus Fig. 3 zu ersehen ist, ist jede Sicke 16 von der einen Seite 10 her eingeprägt, d. h. hat eine Einwölbung 17 und somit auf der Seite 11 eine Auswölbung. Wie im Bereich der zentralen Öffnung 12 deutlich zu sehen ist, sind infolge der Sicken 16 die radial innenliegenden Enden der sektorförmigen Abschnitte 15 nach oben gewölbt. Aufgrund ihrer Sicken 16 sind die sektorförmigen Abschnitte 15 in Radialrichtung zur Öffnung 12 hin versteift und in ihrem Fußbereich 18 federnd elastisch.

Bei der Ausgestaltung der Klemmscheibe von Fig. 1 sind im Bereich der radial äußeren Enden 20 der Schlitze 13 jeweils durch die ganze Klemmscheibe hindurchgehende Bohrungen vorgesehen, um die Elastizität der sektorförmigen Abschnitte 15 in ihrem Fußbereich 18 zu erhöhen.

## Patentansprüche

1. Klemmscheibe aus Metall oder Kunststoff
- mit einer im wesentlichen zentralen Öffnung (12) für den Klemmeingriff mit einem stiftförmigen Körper, der durch die Öffnung (12) von der einen Seite (10) der Klemmscheibe aus einschiebbar ist, und
- mit sich von der Öffnung (12) aus erstreckenden Schlitzen (13), die zueinander im wesentlichen gleiche Winkelabstände haben und in einem Abstand vom äußeren Rand (14) der Klemmscheibe enden,
- wobei alle zwischen den Schlitzen (13) gebildeten sektorförmigen Abschnitte (15) in gleicher Richtung aus der Ebene der einen Seite (10) der Klemmscheibe zur Öffnung (12) hin ausgebogen sind,
**dadurch gekennzeichnet,**
- **daß** jeder sektorförmiger Abschnitt (15) wenigstens eine von der zentralen Öffnung (12) ausgehende, sich zwischen seinen zugeordneten Schlitzen (13) erstreckende Sicke (16) hat.

2. Klemmscheibe nach Anspruch 1, **dadurch gekennzeichnet, daß** jede Sicke (16) einen im wesentlichen gleichen Winkelabstand zu den ihren sektorförmigen Abschnitt (15) begrenzenden Schlitzen (13) hat.

3. Klemmscheibe nach Anspruch 1 oder 2, **dadurch gekennzeichnet, daß** sich die Einwölbung (17) der Sicke (16) eines jeden sektorförmigen Abschnitts (15) auf der einen Seite (10) der Klemmscheibe befindet.

4. Klemmscheibe nach Anspruch 1 oder 2, **dadurch gekennzeichnet, daß** sich die Einwölbungen (17) benachbarter Sicken (16) eines jeden sektorförmigen Abschnitts (15) auf unterschiedlichen Seiten der Klemmscheibe befinden.

5. Klemmscheibe nach einem der vorhergehenden Ansprüche,
**dadurch gekennzeichnet, daß** sich die Sicke (16) von der Öffnung (12) bis zu einer Linie (18) erstreckt, die die klemmscheibenrandseitigen Enden (20) zweier benachbarter Schlitze (13) verbindet, oder davor endet.

6. Klemmscheibe nach einem der vorhergehenden Ansprüche, **dadurch gekennzeichnet, daß** die Sicke (16) im Querschnitt eine spitze oder runde Einwölbung (17) hat.

7. Klemmscheibe nach einem der vorhergehenden Ansprüche, **dadurch gekennzeichnet, daß** zwischen den klemmscheibenrandseitigen Enden (20) der Schlitze (13) und dem Umfangsrand (14) der Klemmscheibe eine umlaufende Umfangsnut (19) ausgebildet ist.

8. Klemmscheibe nach Anspruch 7, **dadurch gekennzeichnet, daß** sich die Einwölbung der Umfangssicke (19) auf der einen Seite (10) der Klemmscheibe befindet.

9. Klemmscheibe nach einem der vorhergehenden Ansprüche,
**dadurch gekennzeichnet, daß** die klemmscheibenrandseitigen Enden (20) der Schlitze (13) in durch die Klemmscheibe gehenden Bohrungen enden.
